# EUROPÄISCHE PATENTANMELDUNG

(11) **EP 0 527 412 A1**
(43) Veröffentlichungstag der Anmeldung: **17.02.1993**
(21) Anmeldenummer: 92113181.9
(22) Anmeldetag: 03.08.1992
(51) Int. Cl.: B60P 1/64

(54) **Kraftfahrzeug mit abnehmbarer Kipp-Ladepritsche**

(30) Priorität: 08.08.1991 DE 4126279
(71) Anmelder: TITAN SPEZIALFAHRZEUGBAU GmbH, D-77767 Appenweier (DE)
(72) Erfinder: Knöller, Jürgen, W-7150 Backnang (DE)
(74) Vertreter: Neymeyer, Franz, Dipl.-Ing. (FH)

(57) **Zusammenfassung**

Bei dem Lastkraftfahrzeug mit abnehmbarer Kipp-Ladepritsche, ist ein hydraulisch oder pneumatisch beaufschlagter, im wesentlichen vertikaler, mit seinem oberen Ende (11) an der Kipp-Laderpritsche befestigter Kippzylinder (10) auf einer Lagerbrücke (14) gelenkig gelagert, die zwischen zwei Längsträgern (2, 3) des Fahrgestells oder zwischen zwei auf den Längsträgern aufsitzenden Hilfsschienen (30, 31) angeordnet ist. Um den Kippzylinder gemeinsam mit der Kipp-Ladepritsche von den Längsträgern (2, 3) abbnehmen und wieder aufsetzen zu könne, ist die durch steckbare Kupplungselemente (48) den Längsträgern oder an den Hilfsschienen (4, 5) befestigte Lagerbrücke (14) von diesen lösbar und statt dessen an Traglaschen (54, 55, 56, 57) befestigbar, die unterseitig an der Kipp-Ladepritsche (9) fest angeordnet sind.

## Beschreibung

Die Erfindung betrifft ein Lastkraftfahrzeug mit abnehmbarer Kipp-Ladepritsche, bei dem ein hydraulisch oder pneumatisch beaufschlagter, im wesentlichen vertikaler, mit seinem oberen Ende an der Kipp-Laderpritsche befestigter Kippzylinder, auf einer Lagerbrücke gelenkig gelagert ist, die zwischen zwei Längsträgern des Fahrgestells oder zwischen zwei auf den Längsträgern aufsitzenden Hilfsschienen angeordnet ist.

Bei einem bekannten Kraftfahrzeug ( DE 30 10 852 A1) ist ein zwei Hilfsschienen aufweisender Aufsatzrahmen an der Unterseite einer Kippmulde befestigt. Ein hydraulisch beaufschlagter Kippzylinder ist mit seinem oberen Ende an der Kippmulde und mit seinem unteren Ende am Aufsatzrahmen befestigt, so daß sowohl der Aufsatzrahmen als auch der Kippzylinder von den Längsträgern des Fahrzeugrahmens gemeinsam mit der Kippmulde abnehmbar sind. Das untere Ende des Kippzylinders ist gelenkig auf einer zwischen längs verlaufenden Hilfsschienen des Aufsatzrahmens angeordneten Lagerbrücke gelagert, die fest mit diesen verbunden ist. Ohne den Aufsatzrahmen ist aber der Kippzylinder nicht gemeinsam mit der Kippmulde von den Längsträgern abnehmbar.

Lastkraftfahrzeuge dieser Art werden unter anderem auch als Winterdienst-Fahrzeuge eingesetzt und für diesen Zweck mit Winterdienst-Streugeräten ausgerüstet. Da die Streugeräte mit Streugutbehältern versehen sind, die ein relativ großes Aufnahmevolumen und deshalb voll beladen auch ein relativ hohes Gewicht aufweisen, ist es wichtig, um Gewicht zu sparen, die Winterdienst-Streugeräte bei abgenommener Kipp-Ladepritsche unmittelbar auf die Hilfsschienen aufsetzen zu können. Bei den meisten bekannten Lastkraftfahrzeugen ist es aber nicht möglich, zugleich auch den im wesentlichen vertikalen Kippzylinder gemeinsam mit der Kipp-Ladepritsche abzunehmen, wenn sie nicht mit einem Aufsatzrahmen versehen ist, so daß dieser Kippzylinder beim Aufsetzen eines Winterdienst-Streugerätes häufig stört, weil er sich nicht unter die Auflageebene der Hilfsschienen absenken läßt.

Aufgabe der Erfindung ist es, bei einem Lastkraftfahrzeug der eingangs genannten Art eine Anordnung zu schaffen, mit der es möglich ist, den Kippzylinder gemeinsam mit der Kipp-Ladepritsche von den auf den Längsträgern des Fahrgestells verbleibenden Hilfsschienen abzunehmen und im Bedarfsfalle gemeinsam mit der Kipp-Laderpritsche wieder auf die Hilfsschienen aufzusetzen.

Gelöst wird diese Aufgabe erfindungsgemäß dadurch, daß die durch steckbare Kupplungselemente an den Längsträgern oder an den Hilfsschienen befestigte Lagerbrücke von diesen lösbar und statt dessen an Traglaschen befestigbar ist, die unterseitig an der Kipp-Ladepritsche fest angeordnet sind.

Der Hauptvorteil, der dadurch erzielt wird, besteht darin, daß der Kippzylinder gemeinsam mit der Lagerbrücke und der Kipp-Ladepritsche vom Fahrgestell des Lastkraftfahrzeuges abgenommen werden kann, Der Kippzylinder muß dazu weder von der Lagerbrücke noch von der Kipp-Ladepritsche gelöst werden. Dabei spielt es auch keine Rolle, ob Hilfsschienen vorhanden sind oder nicht. Es ist lediglich erforderlich, die hydraulischen bzw. pneumatischen Verbindungen zu der fahrzeugeigenen Hydraulik- bzw. Pneumatikanlage zu trennen, was ohne weiteres mit sog. Schnelltrennkupplungen durchführbar ist. Beim Aufsetzen eines Winterdienst-Streufahrzeuges auf die Hilfsschienen ist weder der Kippzylinder noch dessen Lagerbrücke vorhanden.
Es ist aber auch möglich, wenn keine Hilfsschienen am Fahrzeugrahmen vorhanden sind, die Lagerbrücke unmittelbar zwischen den Längsträgern des Fahrgestells anzuordnen und mit diesen lösbar zu verbinden. Dies ist insbesondere dann in Betracht zu ziehen, wenn das aufzusetzende Winterdienst-Streugerät selbst mit Hilfsschienen versehen ist, die unmittelbar auf die Längsträger des Lastkraftfahrzeugs aufgesetzt werden können.

Durch die Ausgestaltung der Erfindung nach Anspruch 2 ergibt sich bei ausreichender Stabilität der Lagerbrücke nicht nur eine einfach herstellbare und stabile Abstützung auf den Hilfsschienen bzw. Längsträgern des Fahrgestells, sondern auch eine einfache Möglichkeit, die Lagerbrücke festsitzend mit dem Fahrgestell zu verbinden.

Mit den Ausgestaltungsmerkmalen des Anspruches 3 läßt sich diese Möglichkeit nicht nur kostengünstig, sondern auch in handhabungsmäßig vorteilhafter Weise realisieren.

Durch die Ausgestaltung nach Anspruch 4 ergibt sich beim Wiederaufsetzen der gemeinsam mit der Kipp-Ladepritsche vom Fahrgestell abgenommenen Lagerbrücke zwangsläufig eine exakte Positionierung dieser Lagerbrücke in Bezug auf die einerseits in den Tragwänden der Lagerbrücke und andererseits in den Hilfsschienen vorhandenen Steckbohrungen, die zum Einstecken der Steckbolzen exakt miteinander fluchten müssen.

Anhand der Zeichnung wird im folgenden ein Ausführungsbeispiel der Erfindung näher erläutert. Es zeigt:
- Fig. 1: in gestrichelten Linien schematisch angedeutet ein Lastkraftfahrzeug mit Kipp-Ladepritsche und in ausgezogenen Linien eine auf das Fahrgestell aufgesetzte Lagerbrücke in perspektivischer Darstellung;
- Fig. 2: in perspektivischer Darstellung Befestigungselemente an der Unterseite der Kipp-Ladepritsche;
- Fig. 3: in Explosionsdarstellung einen Teil des Fahrgestells und die Lagerbrücke mit dem Kippzylinder;
- Fig. 4: die vom Fahrzeug abgenommene Kipp-Ladepritsche auf Stützbeinen in Seitenansicht und
- Fig. 5: eine Ansicht V- aus Fig. 4.

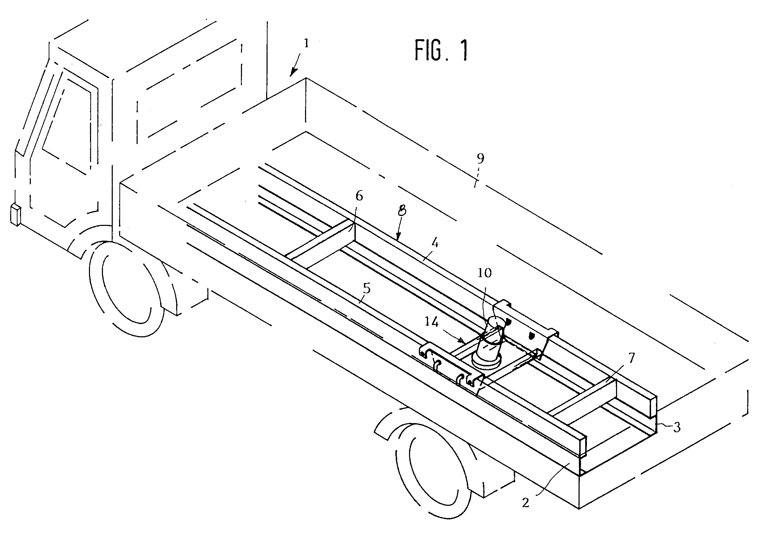

Das in Fig. 1 in gestrichelten Linien andeutungsweise dargestellte Lastkraftfahrzeug 1 besitzt ein Fahrgestell mit zwei in gleicher Höhe in einem gewissen Abstand voneinander parallel verlaufenden Längsträgern 2 und 3 mit einem U- oder H-förmigen Querschnittsprofil. Auf diesen Längsträgern 2,3 liegen ebenfalls parallel zueinander verlaufende Hilfsschienen 4 und 5 auf, die zusammen mit verbindenden Querschenkeln 6 und 7 einen Hilfsrahmen 8 bilden, der fest mit den Längsträgern 2, 3 verbunden ist, und auf den wahlweise eine Kipp-Ladepritsche 9 oder statt dieser z.B. ein Winterdienst-Streugerät (nicht dargestellt) aufgesetzt werden kann. Zum Rippen der Kipp-Ladepritsche 9 ist ein hydraulisch oder pneumatisch betätigbarer Kippzylinder 10 vorgesehen, dessen oberes Ende 11 mit der Unterseite des Bodens 12 der Kipp-Ladepritsche 9 gelenkig verbunden ist und dessen unteres Ende mittels eines Kalottenlagers 13 auf einer Lagerbrücke 14 gelagert ist. Die Lagerbrücke 14 weist eine horizontale Bodenplatte 15 auf, die an ihren quer verlaufenden Rändern mit hochgezogenen, U-förmigen Versteifungsprofilen 16, 17 versehen ist und die an zwei vertikalen Tragwänden 18 bzw. 19 angeschweißt ist. Die Breite der Brücke ist so gewählt, daß sie mit wenig Spiel zwischen die beiden Hilfsschienen 4, 5 bzw. Längsträger 2, 3 paßt und die beiden Tragwände 18, 19 an den Innenseiten 30, 31 der Hilfsschienen 4, 5 bzw. der Längsträger 2, 3 liegen. Oberseitig sind die beiden Tragwände 18 und 19 jeweils mit rechtwinklig, L-förmig angewinkelten Einhängeleisten 20 bzw. 21 versehen, an deren Enden jeweils Winkellaschen 22,23 bzw. 24 ,25 angeordnet sind, die mit den Tragwänden 18 bzw. 19 jeweils U-förmige Einhängeprofile ergeben.
Die Tragwände 18 und 19 sind jeweils mit schräg verlaufenden, nach unten konvergierenden Vertikalkanten 26, 27 bzw. 28, 29 versehen, zu deren konzentrierenden Aufnahme an den einander gegenüberliegenden Innenseiten 30 bzw. 31 der Hilfsschienen 4, 5 jeweils Führungsrippen 32, 33 bzw. 34, 35 angeordnet sind, die ebenfalls schräg verlaufende, die Vertikalkanten 26, 27 bzw. -28, 29 spielfrei aufnehmende Führungsflächen 36, 37 bzw. 38, 39 aufweisen.

Die Tragwände 18 und 19 weisen jeweils zwei Steckbohrungen 40, 41 bzw. 42, 43 auf, denen Steckbohrungen 44, 45 bzw. 46, 47 der Hilfsschienen 4 und 5 fluchtend gegenüberstehen, wenn die Lagerbrücke 14 zwischen den Führungsrippen 32 bis 35 positioniert ist und mit ihren Einhängeleisten 20 und 21 auf den Oberseiten der Hilfsschienen 4 bzw. 5 aufliegt.
Um die Lagerbrücke 14 auf einfache Weise lösbar mit den Hilfsschienen 4 und 5 bzw. mit dem Fahrgestell des Lastkraftfahrzeuges 1 starr verbinden zu können, sind vier Steckbolzen 48 vorgesehen, die in die miteinander fluchtenden Steckbohrungen 44 bis 47 der beiden Hilfsschienen 4, 5 und 40 bis 43 der Tragwände 18, 19 der Lagerbrücke 14 einsteckbar und gegen selbständiges Lösen sicherbar sind.

Wenn die Lagerbrücke 14 auf diese Weise mit den Hilfsschienen 4 und 5 fest verbunden und der Kippzylinder 10 an die fahrzeugeigene Hydraulik angeschlossen ist, läßt sich die Kipp-Ladepritsche 9 in der üblichen Weise als Kipp-Ladepritsche verwenden.

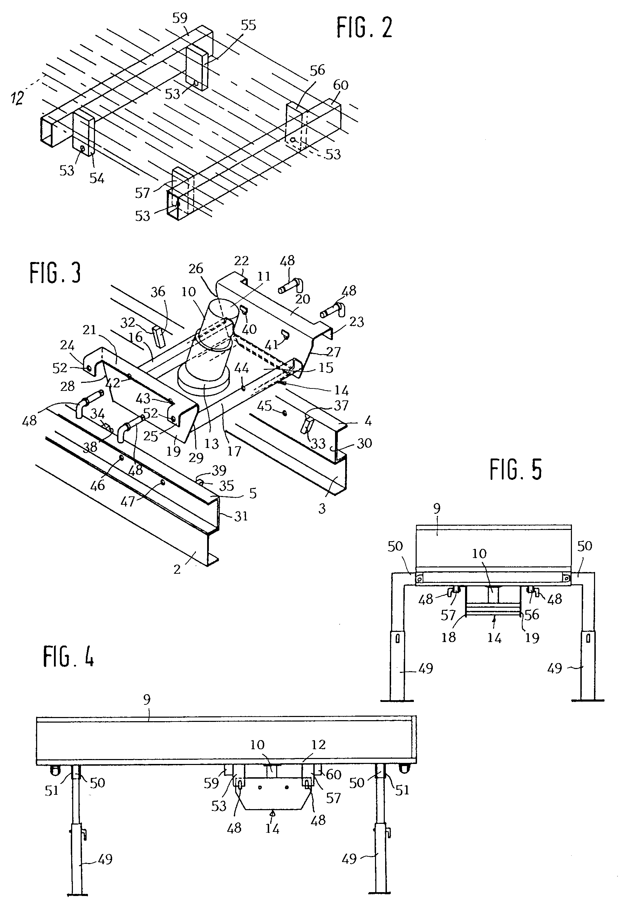

Soll dagegen die Kipp-Ladepritsche 9 vom Fahrgestell abgenommen und, wie in den Fig. 4 und 5 dargestellt ist, in bekannter Weise auf Winkel-Stützbeinen 49, die mit ihren oberen Horizontalschenkeln 50 jeweils in Rechteckrohre 51 an der Unterseite der Kipp-Ladepritsche 9 eingesteckt werden, abgesetzt werden, so ist die Lagerbrücke 14 von den Hilfsschienen 4 und 5 zu lösen und statt dessen mit dem Boden 12 der Kipp-Ladepritsche 9 zu verbinden.
Zu diesem Zweck sind die bereits erwähnten Winkellaschen 22, 23, 24 und 25 jeweils mit einer Querbohrung 52 versehen, die mit Steckbohrungen 53 von Traglaschen 54, 55, 56 und 57 fluchten, welche an der Unterseite des Bodens 12 der Kipp-Ladepritsche 9 so angebracht sind, daß sie jeweils in geringem Abstand auf der Außenseite eines Vertikalschenkels einer Winkellasche 22 bis 25 liegen, wenn die Kipp-Ladepritsche 9 ihre normale Horizontallage auf dem Fahrgestell einnimmt.

Die Traglaschen 54 und 55 sind an einem quer verlaufenden Rechteckrohr 59 und die Traglaschen 56 und 57 an einem ebenfalls quer verlaufenden Rechteckrohr 60 an der Unterseite des Bodens 12 angeschweißt. In dieser Horizontallage ist es dann möglich, die Steckbolzen 48 aus den Steckbohrungen 44 bis 47 der Hilfsschienen 4 und 5 sowie aus den Steckbohrungen 40 bis 43 der beiden Tragwände 18 und 19 der Lagerbrücke 14 herauszuziehen und sie statt dessen in die Querbohrungen 52 der Winkellaschen 22 bis 25 bzw. in die Steckbohrungen 53 der Traglaschen 54 bis 57 zu stecken, um so die Lagerbrücke 14 fest mit der Kipp-Ladepritsche 9 zu verbinden.

Die Kipp-Ladepritsche 9 kann dann gemeinsam mit der Lagerbrücke 14 vom Fahrgestell abgehoben werden, ohne daß es dabei erforderlich ist, den Kippzylinder 10 von der Lagerbrücke 14 oder vom Boden 12 der Kipp-Ladepritsche 9 zu lösen. Vor dem Abheben der Kipp-Ladepritsche 9 vom Fahrgestell des Lastkraftfahrzeuges 1 ist es selbstverständlich erforderlich, die hydraulischen bzw. pneumatlschen Leitungsverbindungen zum Kippzylinder 10 zu trennen.

Auf die von der Kipp-Ladepritsche 9 und der gesamten Kippvorrichtung befreiten Hilfsschienen 4 und 5 kann dann ohne weiteres z.B. ein Winterdienst-Streufahrzeug mit entsprechendem Setzrahmen aufgesetzt werden. Wenn nach dem Einsatz dieses Winterdienst-Streugerätes das Lastkraftfahrzeug wieder mit der Kipp-Ladepritsche 9 versehen werden soll, wird diese nach dem Abnehmen des Winterdienst-Streugerätes gemeinsam mit der Kippvorrichtung, insbesondere mit der Lagerbrücke 14 wieder so auf das Fahrgestell aufgesetzt, daß die beiden Tragwände 18 und 19 der Lagerbrücke 14 exakt positioniert zwischen den Führungsrippen 32, 33, 34 und 35 der Hilfsschienen 4 und 5 sitzen und die Steckbohrungen 40 bis 43 mit den Steckbohrungen 44 bis 47 fluchten. Mit Hilfe der Steckbolzen 48 wird dann wieder die Verbindung zwischen der Lagerbrücke 14 und den Hilfsschienen 4 und 5 in der beschriebenen Weise hergestellt. Gleichzeitig wird dadurch auch die Verbindung zwischen der Lagerbrücke 14 und der Kipp-Ladepritsche 9 gelöst, so daß diese wieder in der üblichen Weise gekippt werden kann.

## Patentansprüche

1. Lastkraftfahrzeug mit abnehmbarer Kipp-Ladepritsche, bei dem ein hydraulisch oder pneumatisch beaufschlagter, im wesentlichen vertikaler, mit seinem oberen Ende an der Kipp-Laderpritsche befestigter Kippzylinder, auf einer Lagerbrücke gelenkig gelagert ist, die zwischen zwei Längsträgern des Fahrgestells oder zwischen zwei auf den Längsträgern aufsitzenden Hilfsschienen angeordnet ist,
**dadurch gekennzeichnet,**
daß die durch steckbare Kupplungselemente (48) den Längsträgern oder an den Hilfsschienen (4, 5) befestigte Lagerbrücke (14) von diesen lösbar und statt dessen an Traglaschen (54, 55, 56, 57) befestigbar ist, die unterseitig an der Kipp-Ladepritsche (9) fest angeordnet sind.

2. Lastkraftfahrzeug nach Anspruch 1, dadurch gekennzeichnet, daß die Lagerbrücke (14) an einer horizontalen Bodenplatte (15) zwei vertikale, jeweils an der Innenseite eines Längsträgers (2, 3) bzw. einer Hilfsschiene (4, 5) liegende Tragwände (18, 19) aufweist, die an ihren oberen Enden mit L-förmig angewinkelten Einhängeleisten (20, 21) versehen sind , welche auf den Hilfsschienen (4, 5) aufliegen.

3. Lastkraftfahrzeug nach Anspruch 2, dadurch gekennzeichnet, daß die Einhängeleisten (20, 21) jeweils an ihren beiden Enden mit Winkellaschen (22, 23, 24, 25) versehen sind, die mit den Tragwänden (18, 19) und Einhängeleisten (20, 21) jeweils U-förmige Einhängeprofile ergeben und daß die Tragwände (18, 19) und die die Hilfsschienen (4, 5) übergreifenden äußeren Vertikalschenkel der Winkellaschen (22, 23, 24, 25) jeweils mit Steckbohrungen (40, 41, 42, 43) bzw. mit Querbohrungen (52) zur wechselweisen Aufnahme von Steckbolzen (48) versehen sind, wobei in der Gebrauchslage der Kipp-Ladepritsche (9) die Steckbohrungen (40, 41, 42, 43) der Tragwände (18, 18) mit Steckbohrungen (44, 45, 46, 47) der Hilfsschienen (4, 5) fluchten und die Querbohrungen (52) der Winkellaschen (22, 23, 24, 25) mit Steckbohrungen (53) der an der Kipp-Ladepritsche (9) angeordneten Traglaschen (54, 55, 56, 57) fluchten.

4. Lastkraftfahrzeug nach Anspruch 2 oder 3, dadurch gekennzeichnet, daß die Tragwände (18, 19) der Lagerbrücke (14) jeweils schräg verlaufende Vertikalkanten (26, 27 bzw. 28, 29) aufweisen, die an schrägen Führungsflächen (36, 37 bzw. 38, 39) von an den Hilfsschienen (4, 5) oder an den Längsträgern (2, 3) angeordneten Führungsrippen (32, 33, 34, 35) anliegen.
